# EUROPÄISCHE PATENTANMELDUNG

(11) **EP 3 890 314 A1**
(43) Veröffentlichungstag der Anmeldung: **06.10.2021**
(21) Anmeldenummer: 21158540.1
(22) Anmeldetag: 22.02.2021
(51) Int. Cl.: H04N 7/18

(54) **AUSTAUSCH EINER KAMERA**

(30) Priorität: 31.03.2020 DE 102020108910
(71) Anmelder: SICK AG, 79183 Waldkirch (DE)
(72) Erfinder: Lauer, Roman, 79111 Freiburg (DE)

(57) **Zusammenfassung**

Es wird eine Kamera (18ᵢ) angegeben, die einen Bildsensor (22) zur Aufnahme von Bilddaten aus einem Sichtbereich (20), eine Kommunikationsschnittstelle (30) zum Verbinden mit mindestens einer weiteren Kamera (18ᵢ) in einem Netzwerk, eine Steuer- und Auswertungseinheit (26) zum Auslesen der Bilddaten sowie einen Speicher (28) aufweist, in dem ein Parametersatz für den Betrieb der Kamera (18ᵢ) abgelegt ist. Dabei ist in dem Speicher (28) mindestens ein weiterer Parametersatz für den Betrieb mindestens einer weiteren Kamera (18ᵢ) des Netzwerks abgelegt.

## Beschreibung

Die Erfindung betrifft eine Kamera nach dem Oberbegriff von Anspruch 1 und ein Verfahren zum Austausch einer Kamera.

Zur Automatisierung von Vorgängen an einem Förderband werden Sensoren eingesetzt, um Objekteigenschaften der geförderten Objekte zu erfassen und in Abhängigkeit davon weitere Bearbeitungsschritte einzuleiten. In der Logistikautomation besteht die Bearbeitung typischerweise in einer Sortierung, etwa bei der automatischen Paketidentifikation, für Postsendungen oder die Gepäckabfertigung in Flughäfen. Neben allgemeinen Informationen, wie Volumen und Gewicht der Objekte, dient als wichtigste Informationsquelle häufig ein an dem Objekt angebrachter optischer Code. In anderen Fällen geht es um eine Inspektion oder Qualitätsprüfung, an der ein optischer Code beteiligt sein kann, aber nicht muss.

Mit der Weiterentwicklung der digitalen Kameratechnologie werden zum Codelesen zunehmend kamerabasierte Codeleser eingesetzt. Statt Codebereiche wie in einem Barcodescanner abzuscannen, nimmt ein kamerabasierter Codeleser mit Hilfe eines pixelaufgelösten Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. In einer wichtigen Anwendungsgruppe werden die Code tragenden Objekte an dem Codeleser vorbei gefördert. Eine Kamera liest die Objektbilder mit den Codeinformationen sukzessive mit der Relativbewegung ein.

Eine einzelne Kamera reicht oft nicht aus, um sämtliche relevanten Informationen über die Objekte auf einem Förderband aufzunehmen. Deshalb werden mehrere Kameras in einem Lesesystem oder Lesetunnel zusammengefasst. Liegen zur Erhöhung des Objektdurchsatzes mehrere Förderbänder nebeneinander, oder wird ein verbreitertes Förderband verwendet, so ergänzen sich mehrere Kameras in ihren an sich zu schmalen Sichtfeldern gegenseitig, um die gesamte Breite abzudecken. Außerdem werden Kameras in unterschiedlichen Perspektiven montiert, um Codes von allen Seiten aufzunehmen (Omni-Lesung).

Im Laufe des Betriebs kommt es immer wieder vor, dass eine der Kameras beispielsweise aufgrund eines Defekts ausgetauscht werden muss. Herkömmlich speichert die Kamera für diesen Fall ihre Konfiguration oder Parameter auf einer SD-Karte. Beim Austausch wird dann die SD-Karte in das neue Gerät eingesetzt, das somit die Einstellungen seines Vorgängers übernimmt und direkt betriebsbereit ist.

Der Austausch ist aber bei genauer Betrachtung nicht so einfach und robust, wie man sich das wünschen würde. Zum Öffnen des Altgeräts bei Entnahme der SD-Karte wird ein Schraubenzieher benötigt, desgleichen zum Einsetzen in das Austauschgerät. Das ist umständlich und findet in der Regel nicht in einer ESD-gesicherten Umgebung statt, so dass es zu weiteren Beschädigungen kommen kann. Der Umgang mit einer Mikro-SD-Karte ist heikel, sie kann verloren gehen, oder es wird versehentlich die falsche Mikro-SD-Karte eingebaut. Die Gefahr einer Verwechslung besteht auch deshalb, weil das Austauschgerät selbst mit seiner eigenen Mikro-SD-Karte ausgeliefert wird, die in dem Austauschfall eigentlich nicht gebraucht wird und übrigbleibt. Schließlich sind Beschädigungen der Mikro-SD-Karte des Altgeräts denkbar, die bei einem Defekt in Mitleidenschaft gezogen sein kann, so dass dann die Parameterübertragung scheitert oder gar unbemerkt falsche Werte überträgt.

Im Stand der Technik sind verschiedene andere Hardwarebausteine anstelle einer SD-Karte bekannt, um Parameter für ein Austauschgerät zu sichern. Als nur ein Beispiel sei die DE 10 2005 049 483 A1 genannt, die einen elektrischen Stecker zur dezentralen Speicherung der Parameter eines Sensors offenbart. Die Nachteile sind aber im Wesentlichen die gleichen.

In der DE 10 2011 051 212 A1 wird ein Auswechseln von Feldgeräten in einem Prozessleitsystem beschrieben. Dabei werden Konfigurationsdaten an ein ausgetauschtes Feldgerät gesendet. Diese Konfigurationsdaten stammen jedoch von einem zentralen Konfigurationssystem. Die Architektur eines Prozessleitsystems unterscheidet sich stark von derjenigen bei Kameras zum Codelesen.

Die DE 10 2012 107 673 A1 offenbart ein Verfahren zum Feldgerätetausch mit Hilfe eines mobilen Endgeräts. Hier ist der an das Austauschfeldgerät zu übermittelnde Parametersatz auf einem Webserver gespeichert, mit dem das Endgerät die Kommunikation vermittelt. Auch in diesem Fall wird eine recht aufwändige Netzwerkstruktur mit zentraler Speicherung der Parameter verwendet.

Es ist daher Aufgabe der Erfindung, den Austausch einer Kamera zu vereinfachen.

Diese Aufgabe wird durch eine Kamera und ein Verfahren zum Austausch einer Kamera nach Anspruch 1 beziehungsweise 15 gelöst. Die Kamera weist einen Bildsensor auf, mit dem Bilddaten ihres Sichtbereichs aufgenommen werden. Über eine Kommunikationsschnittstelle wird die Kamera im Betrieb an ein Netzwerk mit weiteren Kameras und möglicherweise weiteren Geräten angebunden, wie einer übergeordneten Steuerung. Eine Steuer- und Auswertungseinheit liest Bilddaten aus dem Bildsensor aus. Je nach Ausführungsform werden die Bilddaten vorverarbeitet oder ausgewertet, und die Steuer- und Auswertungseinheit kümmert sich um die Koordination der Funktionen der Kamera. In einem Speicher ist ein Parametersatz für den Betrieb der Kamera abgelegt.

Die Erfindung geht von dem Grundgedanken aus, dass die Kamera noch mindestens einen weiteren Parametersatz für eine weitere Kamera sichert. Wenn jene weitere Kamera später beispielsweise nach einem Ausfall ersetzt wird, steht somit deren Parametersatz im Netzwerk noch zur Verfügung.

Die Erfindung hat den Vorteil, dass eine besonders robuste und leicht zu handhabende Sicherung und Übertragung von Parametern ermöglicht wird. Durch die dezentrale Speicherung in einer Kamera des Netzwerks wird eine Art Crowd-basiertes Parameterclonen ermöglicht. Das ist besonders im Falle eines Defekts und Austauschs einer Kamera von Interesse, wo die Erfindung zu einer erheblichen Vereinfachung und Beschleunigung führt, aber beispielsweise auch bei einem versehentlichen Fehlkonfigurieren oder Löschen von Parametern in einer Kamera. Insbesondere werden die Nachteile der herkömmlichen Speicherung auf einer SD-Karte vermieden, denn es muss kein Gerät geöffnet werden, die alte SD-Karte kann nicht versehentlich verloren gehen und eine neue SD-Karte bleibt nicht übrig. Es ist überhaupt keine körperliche Handlung zur Übertragung der Parameter von der einen Kamera zur anderen erforderlich.

Der Parametersatz ist beispielsweise das Ergebnis einer Kalibrierung oder Konfiguration. Es gibt eine Vielzahl möglicher Parameter, von denen rein beispielhaft Objektivkorrekturen, Filter, eine eigene Position der Kamera, eine Bildauflösung, ein Ausgabeformat für Bilddaten, Fokuseinstellungen und interessierende Bereiche (ROI, Region of Interest) genannt seien. Als Parametersatz sind hier diejenigen Daten bezeichnet, die für eine gegenseitige Übertragung zwischen den Kameras gesichert werden. Es kann weitere Parameter geben, die nicht in dieser Weise behandelt werden, etwa solche wie Parameter zur Korrektur von Herstellungstoleranzen der Optik, bei denen eine Sicherung sinnlos ist, weil sie nur für genau diese Kamera gelten und in einem Austauschgerät nicht verwendbar wären. Die Parametersätze haben vorzugsweise ein gleiches Format beziehungsweise enthalten die gleichen Parametertypen, aber es sind auch verschieden aufgebaute Parametersätze für unterschiedliche Kameratypen vorstellbar.

In dem Speicher ist bevorzugt eine Netzwerkkonfiguration abgelegt. Die Netzwerkkonfiguration enthält Informationen wie eine IP-Adresse oder eine CAN Node ID und dergleichen und ermöglicht der Kamera die Teilnahme an der Kommunikation in dem Netzwerk. Die Netzwerkkonfiguration kann Teil des Parametersatzes sein, der für eine gegenseitige Sicherung und Übertragung vorgesehen ist. Wird die Netzwerkkonfiguration auf ein Austauschgerät gespielt, so erscheint das Austauschgerät gegenüber dem Netzwerk wie sein Vorgänger. Allerdings ergibt sich je nach Netzwerkarchitektur möglicherweise ein Henne-Ei-Problem, da auf das Austauschgerät erst Daten überspielt werden können, nachdem es Teilnehmer in dem Netzwerk ist. Das kann durch eine provisorische Netzwerkkonfiguration gelöst werden. Alternativ wird die Netzwerkkonfiguration nicht als Teil des Parametersatzes behandelt, sondern einem Austauschgerät eine Netzwerkkonfiguration mit einem Mechanismus mittels eines Cloning-Masters mitgeteilt, der noch vorgestellt wird.

In dem Speicher ist bevorzugt eine Gerätekarte mit der mindestens einen weiteren Kamera abgelegt, wobei die Gerätekarte die Kameras umfasst, die gegenseitig füreinander einen Parametersatz speichern. Die Gerätekarte (Device Map) ist eine Tabelle oder dergleichen mit Identifikationen oder Adressen der weiteren Kameras und keineswegs mit einer physischen Karte wie einer SD-Karte zu verwechseln. Die Gerätekarte kann wie die Netzwerkkonfiguration als Teil des Parametersatzes gesichert und zwischen Kameras übertragen oder mittels Cloning-Masters modifiziert werden.

In dem Speicher sind vorzugsweise weitere Parametersätze für den Betrieb von mindestens zwei weiteren Kameras des Netzwerks abgelegt. Es bilden also mehrere Kameras eine Art Cloning-Netzwerk mit gegenseitiger Sicherung und Übertragungsmöglichkeit ihrer jeweiligen Parametersätze. Das Cloning-Netzwerk kann alle Kameras eines Systems oder nur eine Teilgruppe umfassen. Indem jeder Parametersatz mindestens zweimal in jeweils einer anderen Kamera gesichert ist, kann ein einzelner Ausfall nicht mehr zum Verlust eines Parametersatzes führen. Es ist äußerst unwahrscheinlich, dass eine Kamera ausgetauscht werden muss und gleich beide Partner mit deren gesicherten Parametersätzen mit ausgefallen sind. Ein System aus Kameras mit dieser Ausführungsform ist also noch weniger fehleranfällig und zuverlässiger.

Die Steuer- und Auswertungseinheit ist bevorzugt dafür ausgebildet, einen Kameratausch in dem Netzwerk zu erkennen, wenn eine weitere Kamera nicht mehr im Netzwerk verbunden ist und anschließend eine neue Kamera im Netzwerk verbunden wird. Eine solche Kamera ist also in der Lage, selbsttätig zu erkennen, wann auf einen Kameratausch zu reagieren ist. Die Initiative geht somit entsprechend dem Crowd-basierten Ansatz von den Kameras selbst aus und damit weder von dem Austauschgerät noch von einer Zentrale. Eine Nachricht des Austauschgeräts, mit dem eine Übertragung eines Parametersatzes angefordert wird, wäre aber denkbar, sofern die Netzwerkarchitektur solche Nachrichten zulässt beziehungsweise sobald das Austauschgerät zumindest provisorisch in dem Netzwerk kommunizieren kann.

Die Steuer- und Auswertungseinheit ist bevorzugt dafür ausgebildet, sich in dem Netzwerk bei Erkennen eines Kameratauschs als Master für die Einbindung der neuen Kamera in das Netzwerk zu melden. Diese Kamera wird auch als Cloning-Master bezeichnet, da sie für die Koordination während der Einbindung der neuen Kamera in das Netzwerk und der gegenseitigen Übertragung von Parametersätzen verantwortlich ist. Zum Cloning-Master wird vorzugsweise die erste Kamera, die den Kameratausch bemerkt. Jedenfalls ernennt sie sich nur zum Cloning-Master, solange keine andere Kamera das getan hat. Mit einem möglichen Master des Netzwerks für den eigentlichen Betrieb überschneidet sich die vorübergehende Funktion des Cloning-Masters allenfalls zufällig, wenn ausgerechnet der eigentliche Master zuerst einen Kameratausch einer weiteren Kamera bemerkt, für die er einen Parametersatz gespeichert hat.

Die Steuer- und Auswertungseinheit ist bevorzugt dafür ausgebildet, der neuen Kamera die Netzwerkkonfiguration der nicht mehr verbundenen weiteren Kamera mitzuteilen. In dieser Funktion hat die Kamera vorzugsweise die Rolle des Cloning-Masters übernommen. Durch die Übergabe der Netzwerkkonfiguration wird die neue Kamera zu einem Teilnehmer im Netzwerk. Vorzugsweise wird gerade die Netzwerkkonfiguration des ausgetauschten Geräts übertragen, so dass die neue Kamera ebenso angesprochen werden kann wie bisher.

Die Steuer- und Auswertungseinheit ist bevorzugt dafür ausgebildet, dem Netzwerk einschließlich der neuen Kamera eine aktualisierte Gerätekarte zu kommunizieren. Auch das geschieht vorzugsweise in der Funktion des Cloning-Masters. In der Gerätekarte wird die alte Kamera aus- und die neue Kamera eingetragen. Dies wird allen Kameras mitgeteilt, so dass diejenigen Kameras, die von dem Austausch betroffen sind, wieder eine aktuelle Gerätekarte aufweisen. Auch die neue Kamera erhält bei dieser Gelegenheit eine aktuelle Gerätekarte.

Die Steuer- und Auswertungseinheit ist bevorzugt dafür ausgebildet, den für die bisher verbundene weitere Kamera gespeicherten weiteren Parametersatz an die neue Kamera zu übertragen. Wiederum vorzugsweise in Funktion als Cloning-Masters betrifft dieser Schritt die eigentliche Übertragung der Parameter oder das Parameter-Cloning. Der neuen Kamera wird dabei der gesicherte Parametersatz der alten Kamera übergeben, die somit sofort in einer gleichen Weise parametriert beziehungsweise konfiguriert ist.

Die Steuer- und Auswertungseinheit ist bevorzugt dafür ausgebildet, eine Übertragung der weiteren Parametersätze einer weiteren Kamera, die in dem Speicher der nicht mehr verbundenen Kamera abgelegt waren, in den Speicher der neuen Kamera zu veranlassen. Nochmals ist das vorzugsweise eine Funktion als Cloning-Master. Die neue Kamera soll für die Zukunft auch Parametersätze der anderen Kameras speichern. Deshalb schicken alle weiteren Kameras, deren Parametersatz in der alten Kamera abgelegt waren, ihren Parametersatz zur dortigen Speicherung an die neue Kamera. Welche Kameras das sind, wird vorzugsweise aus der Gerätekarte abgelesen. Das Parameter-Cloning hat also zwei Teile: Zum einen wird der von der alten Kamera verwendete Parametersatz auf die neue Kamera gespielt, die dann damit arbeitet. Zum anderen werden die Parametersätze, die von der alten Kamera für weitere Kameras des Netzwerks gespeichert wurden, nun auch auf der neuen Kamera gesichert.

Die Steuer- und Auswertungseinheit ist bevorzugt dafür ausgebildet zu erkennen, dass sie sich in einem noch unkonfigurierten Zustand befindet, und auf Kommunikationsanforderungen des Netzwerks zu warten. Während bisher Eigenschaften der Kamera für eine Rolle als im Netzwerk verbleibende Kamera beschrieben wurden, insbesondere als Cloning-Master, ist die Kamera vorzugsweise auch auf eine Rolle als Austauschgerät vorbereitet. Befindet sich die Kamera in einem unkonfigurierten Zustand, ist also insbesondere auf Werkseinstellungen gesetzt, dann nimmt sie noch nicht an einer Kommunikation teil, sondern wartet, dass sie ins Netzwerk eingebunden wird. Sie teilt dem Netzwerk jedoch vorzugsweise ihre Seriennummer oder dergleichen mit, damit andere Kameras erkennen können, dass eine neue Kamera angeschlossen wurde.

Die Steuer- und Auswertungseinheit ist bevorzugt dafür ausgebildet zu erkennen, dass das Netzwerk nicht dasjenige der mindestens einen weiteren Kamera ist, für die ein weiterer Parametersatz gespeichert ist, und auf Kommunikationsanforderungen des Netzwerks zu warten. In diesem Fall ist die Kamera nicht auf Werkseinstellungen oder dergleichen gesetzt, sondern bereits für einen Verbund konfiguriert. Damit besteht die Gefahr, dass sie mit dem bisherigen Verbund zu kommunizieren versucht und dadurch stört. Deshalb prüft die Kamera nach dieser Ausführungsform, ob überhaupt noch eine der bekannten Kameras verbunden ist, für die sie einen Parametersatz gesichert hat beziehungsweise die auf ihrer Gerätekarte stehen. Findet sich kein solcher Partner, so nimmt die Kamera an, dass sie in einem neuen Verbund angeschlossen ist. Sie verhält sich dann im Wesentlichen so wie bei Werkseinstellungen und wartet, dass sie ins neue Netzwerk eingebunden wird.

Die Steuer- und Auswertungseinheit ist bevorzugt dafür ausgebildet, einen im Speicher abgelegten weiteren Parametersatz mit einer weiteren Kamera abzugleichen. Ein solcher Abgleich findet beispielsweise zyklisch oder beim Booten statt. Es wird geprüft, ob sich die Kameras noch über die Daten der verwendeten beziehungsweise gegenseitig gesicherten Parametersätze einig sind. Ansonsten wurde womöglich eine Kamera umkonfiguriert, oder es liegt eventuell ein Speicherfehler vor. Speicherfehler lassen sich auch durch redundante Speicherung innerhalb der Kamera auffangen. Ergibt der Abgleich eine Diskrepanz, so kann dies gemeldet werden. Ansonsten hat vorzugsweise der Parametersatz Vorrang, den eine Kamera für sich selbst gespeichert hat, und dieser Parametersatz kann neu gegenseitig gesichert werden.

Die Steuer- und Auswertungseinheit ist bevorzugt dafür ausgebildet, Codes in den Bilddaten zu lesen. Die Kamera wird damit zu einem kamerabasierten Codeleser.

In vorteilhafter Weiterbildung ist eine Kameravorrichtung mit einer Vielzahl von erfindungsgemäßen Kameras vorgesehen, die in einem Netzwerk verbunden sind. Es kann zusätzlich weitere Kameras geben, die nicht an der gegenseitigen Sicherung von Parametersätzen teilnehmen, beziehungsweise es kann mehrere Cluster von einander gegenseitig sichernden Kameras geben. Zumindest einige der Kameras sind vorzugsweise derart montiert, dass sie durch teilüberlappende, einander ergänzende Sichtbereiche gemeinsam Objekte in einem Erfassungsbereich aufnehmen. Kameras können aber auch nicht überlappende Sichtbereiche aufweisen, beispielsweise aus unterschiedlicher Perspektive von oben, von den Seiten, von unten, von vorne, von hinten und/oder aus einer schrägen Perspektive, und gemeinsam eine Szenerie oder ein Objekt beobachten, insbesondere einen Abschnitt einer Fördereinrichtung für Objekte.

Die Kameravorrichtung ist bevorzugt als Lesetunnel zum Lesen von Codes auf Objekten ausgebildet, die durch den Lesetunnel gefördert werden. Dabei lesen die Kameras selbst Codes und/oder es werden nachgelagert in einem übergeordneten System aus einzelnen Bildern oder einem zusammengesetzten Gesamtbild (Image Stitching) Codes gelesen.

Die Kameras sind bevorzugt untereinander baugleich. Vorzugsweise besitzen die Kameras jedoch zumindest ein individuelles Merkmal wie eine Seriennummer, das auch der Steuer- und Auswertungseinheit bekannt ist und somit kommuniziert werden kann. Es ist weiterhin nicht ausgeschlossen, dass die Kameras beispielsweise abwärtskompatible Geräte unterschiedlichen Herstelldatums sind. Auch eine heterogene Anordnung mit unterschiedlichen Kameras ist vorstellbar.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Ansicht einer Kameravorrichtung über einem Förderband mit zu erfassenden Objekten;
- Fig. 2: eine ergänzende Schnittdarstellung von Einzelkameras der Kameravorrichtung samt deren Sichtfeldern;
- Fig. 3: eine Blockdarstellung einer einzelnen Kamera;
- Fig. 4: ein Ablaufschema eine Initialisierungsphase einer Kameravorrichtung mit einer Vielzahl von Kameras:
- Fig. 5: eine Darstellung von in den Kameras gespeicherten Daten und Parametern nach der Initialisierungsphase;
- Fig. 6: ein Ablaufschema für die Übertragung von Parametern bei Austausch einer Kamera, wobei die neue Kamera auf Werkseinstellungen gesetzt ist;
- Fig. 7: eine Darstellung von in den Kameras gespeicherten Daten und Parametern direkt nach Anschluss der neuen Kamera;
- Fig. 8: eine Darstellung von in den Kameras gespeicherten Daten und Parametern nach Übertragung einer Netzwerkkonfiguration an die neue Kamera;
- Fig. 9: eine Darstellung von in den Kameras gespeicherten Daten und Parametern nach Übertragung einer Gerätekarte an die neue Kamera;
- Fig. 10: eine Darstellung von in den Kameras gespeicherten Daten und Parametern nach Abschluss der Übertragung der Parameter;
- Fig. 11: ein Ablaufschema für die Übertragung von Parametern bei Austausch einer Kamera, wobei die neue Kamera auf Einstellungen aus einem Netzwerk gesetzt ist, in dem sie bisher betrieben wurde; und
- Fig. 12-15: eine Darstellung von in den Kameras gespeicherten Daten und Parametern entsprechend den Figuren 8-11 für das Ablaufschema der Figur 11.

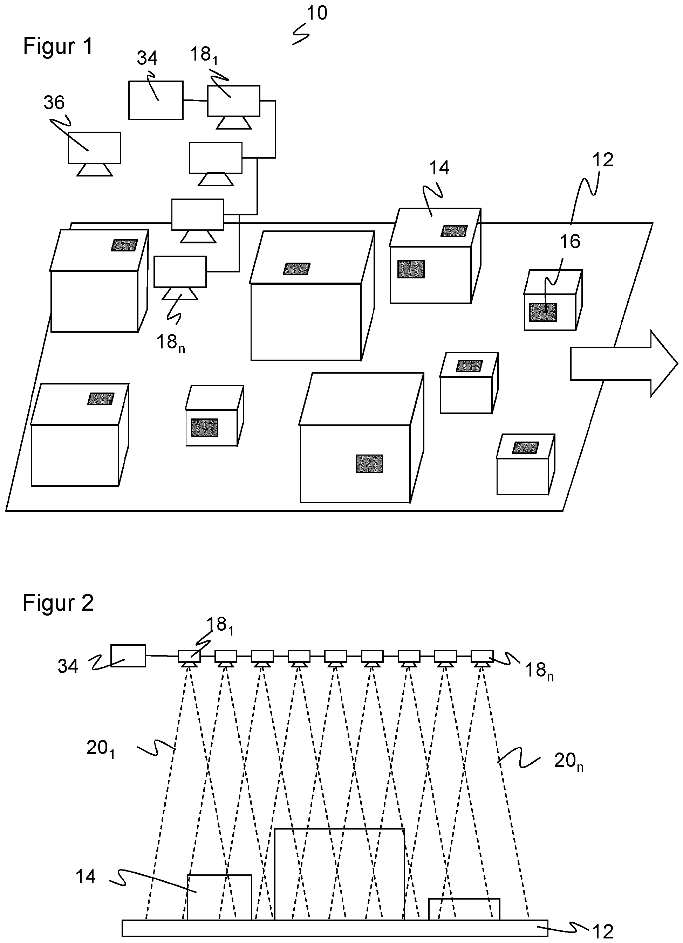

Figur 1 zeigt eine schematische dreidimensionale Ansicht eines Multikamerasystems beziehungsweise einer Kameravorrichtung 10 über einem Förderband 12 mit zu erfassenden Objekten 14, auf denen beispielhaft, aber nicht notwendig Codes 16 angebracht sind. Das Förderband 12 ist ein Beispiel für die Erzeugung eines Stromes von Objekten 14, die sich relativ zu der stationären Kameravorrichtung 10 bewegen. Alternativ kann die Kameravorrichtung 10 auch eine Szenerie ohne Förderband 12 beobachten. Die Kameravorrichtung 10 umfasst mehrere Kameras 18₁..18ₙ, wobei in Figur 1 beispielhaft n=4 gilt. Zusätzlich zu den gezeigten Kameras 18₁..18ₙ in einer Perspektive von oben können weitere Kameras aus anderer Richtung, beispielsweise seitlich montiert sein, um weitere Objektseiten zu erfassen. Die Kameras 18₁..18ₙ sind in einer Reihe quer zu dem Förderband 12 angeordnet, wobei auch andere Anordnungen in abweichender Orientierung oder beispielsweise als Matrix vorstellbar sind.

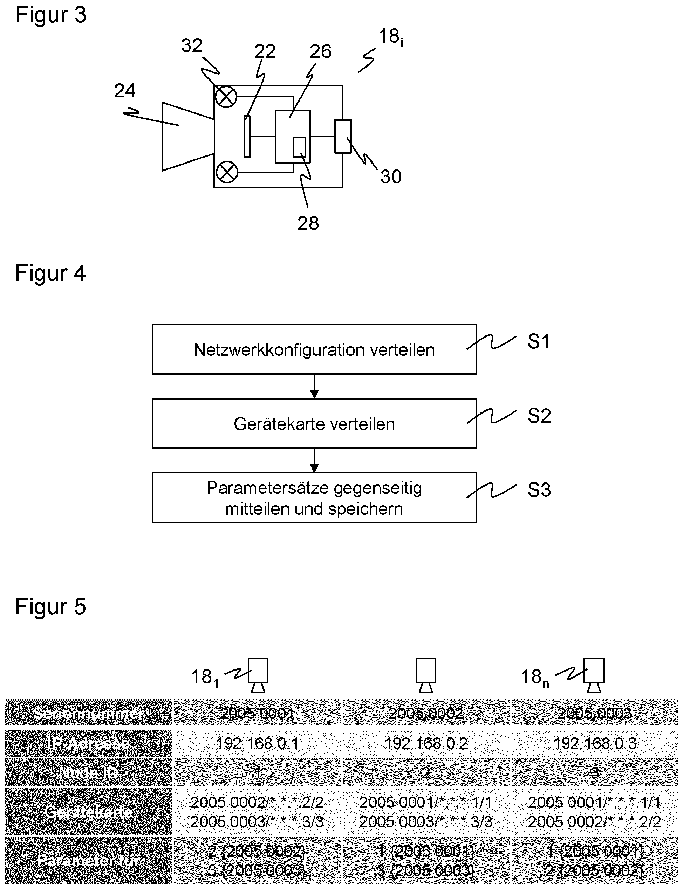

Figur 2 zeigt ergänzend die Anordnung der Kameras 18₁..18ₙ und ihrer Sichtfelder 20₁..20ₙ über dem Förderband 12 in einer Schnittdarstellung, wobei nun ein anderes Beispiel mit mehr Kameras 18₁..18ₙ gewählt ist, und Figur 3 zeigt eine einzelne Kamera 18ᵢ. Die Kameras 18₁..18ₙ weisen jeweils einen Bildsensor 22 mit einer Vielzahl von zu einer Pixelzeile oder einer Pixelmatrix angeordneten Lichtempfangselementen sowie ein Objektiv 24 auf. Eine jeweilige Steuer- und Auswertungseinheit 26 liest Bilddaten aus und ist für kamerabezogene Steuerungsaufgaben und Auswertungen zuständig. Die Steuer- und Auswertungseinheit 26 verfügt über einen Speicher 28, in dem Parameter, Netzwerkkonfigurationen und eine Gerätekarte mit Identitäten beziehungsweise Adressen weiterer Kameras 18₁..18ₙ abgelegt werden können. In dem Speicher 28 sind auch Daten, insbesondere Parameter für andere Kameras 18₁..18ₙ gesichert; dies wird weiter unten näher erläutert. Über eine jeweilige Kommunikationsstelle 30 sind die Kameras 18₁..18ₙ an ein Netzwerk angebunden, etwa über Ethernet oder CAN. Weiterhin verfügen die Kameras 18₁..18ₙ vorzugsweise über eine Beleuchtung 32, um bei einer Aufnahme das eigene Sichtfeld 20₁..20ₙ auszuleuchten. In dem Netzwerk kann eine übergeordnete Steuerung 34 vorgesehen sein, deren Aufgaben stattdessen zumindest teilweise von einer Kamera 18₁..18ₙ übernommen werden können. Die Kameras 18₁..18ₙ sind vorzugsweise untereinander baugleich, um die Systemkomplexität zu verringern. Sie können aber mit unterschiedlichen Konfigurationen und Aufnahmeparametern arbeiten.

In bevorzugter Ausführungsform sind die Kameras 18₁..18ₙ als Codeleser ausgebildet, in denen die Steuer- und Auswertungseinheit 26 zusätzlich als Decodiereinheit zum Auslesen von Codeinformationen und entsprechende Vorverarbeitungen zum Auffinden und Aufbereiten von Codebereichen fungiert. Es ist auch denkbar, Ströme von Objekten 14 ohne Codes 16 zu erfassen und dementsprechend auf die Decodiereinheit selbst oder auf deren Verwendung zu verzichten, beispielsweise zur Inspektion oder Qualitätskontrolle. Außerdem kann eine Decodierung auch nachgelagert außerhalb der Kameras 18₁..18ₙ auf deren Bilddaten erfolgen, insbesondere in der übergeordneten Steuerung 34.

Das Förderband 12 ist zu breit, um von einer einzelnen Kamera 18₁..18ₙ erfasst zu werden. Deshalb ergänzen die Sichtfelder 20₁..20ₙ der Kameras 18₁..18ₙ einander in Querrichtung des Förderbandes 12 vorzugsweise unter teilweiser gegenseitiger Überlappung. Bezüglich der Bewegungsrichtung des Förderbandes 12 oberhalb der Einzelkameras 18₁..18ₙ ist ein optionaler Geometrieerfassungssensor 36 beispielsweise in Form eines an sich bekannten entfernungsmessenden Laserscanners angeordnet, um vorab die dreidimensionale Kontur der Objekte 14 auf dem Förderband 12 zu vermessen, aus denen sich beispielsweise Abmessungen, Volumen, Position und Form ergeben. Außerdem können die Geometriedaten genutzt werden, um die Aufnahmen auszulösen und die Kameras 18₁..18ₙ zu fokussieren.

Figur 4 zeigt ein Ablaufschema für eine Initialisierungsphase der Kameravorrichtung. Dabei sind unter den zahlreichen denkbaren oder erforderlichen Schritten einer anfänglichen Inbetriebnahme nur diejenigen Schritte diskutiert, die in einem Zusammenhang mit einer gegenseitigen Parametersicherung und Parameterrückübertragung stehen.

In einem Schritt S1 wird das Netzwerk konfiguriert, wobei jede Form einer automatischen, manuellen oder teilautomatischen Konfiguration möglich ist. Die Kameras 18₁..18ₙ sind anfänglich auf Werkseinstellung gesetzt, verfügen jedoch über eine eindeutige Seriennummer oder ein sonstiges individuelles Merkmal, das alternativ auch ausgehandelt werden könnte. Die Initialisierung kann beispielsweise durch einen Master unter den Kameras 18₁..18ₙ oder von der übergeordneten Steuerung 34 koordiniert werden. Zuerst findet eine Geräteerkennung statt. Den erkannten Geräten wird dann eine unterscheidbare Netzwerkadresse zugeteilt, wie eine IP-Adresse oder eine CAN Node ID. Damit sind die Kameras 18₁..18ₙ in der Lage, über das Netzwerk miteinander zu kommunizieren.

In einem Schritt S2 wird eine Gerätekarte erzeugt und verteilt. Die Gerätekarte enthält beispielsweise die Seriennummern, IP-Adressen und Node IDs der verbundenen Kameras 18₁..18ₙ. Für das gegenseitige Sichern und Rückspielen von Parametersätzen genügt es, wenn die Gerätekarte jeder Kamera 18₁..18ₙ eine weitere Kamera 18₁..18ₙ enthält, sicherheitshalber zum Schutz vor einem Ausfall aber besser zwei oder noch mehr Kameras 18₁..18ₙ. Die Gerätekarten können vor oder nach der Verteilung entsprechend ausgedünnt werden.

In einem Schritt S3 werden die Parametersätze der einzelnen Kameras 18₁..18ₙ gegenseitig mitgeteilt und im jeweiligen Speicher 28 abgelegt. Das wird auch als Parameter-cloning bezeichnet. Welche Kameras 18₁..18ₙ das jeweils sind, wird vorzugsweise anhand der Gerätekarten entschieden. Die Gerätekarten sind also nicht notwendig vollständige Repräsentationen der Kameravorrichtung 10, sondern nur ein Ausschnitt für das Parametercloning. Es gibt damit zumindest einfache Redundanz durch Speichern eines Parametersatzes in einer jeweiligen Kamera 18₁..18ₙ selbst sowie in deren mindestens einem Partner, vorzugsweise doppelte Redundanz bei zwei Partnern bis hin zu maximaler Sicherheit, wenn jede Kamera 18₁..18ₙ für jede andere Kamera 18₁..18ₙ die Parametersätze speichert.

Ein beispielhaftes Ergebnis der Initialisierungsphase ist in Figur 5 gezeigt. Um nicht zu viele Informationen zu zeigen, sind nur noch drei Kameras 18₁..18ₙ dargestellt, ohne deren Anzahl dadurch tatsächlich zu beschränken. Die Kameras 18₁..18ₙ werden abjetzt häufiger vereinfachend ohne Bezugszeichen als erste, zweite und dritte Kamera entsprechend der Spaltenposition in der dargestellten Tabelle bezeichnet, ohne dass diese Namen eine besondere oder gar einschränkende technische Bedeutung hätten. Natürlich müssen die Daten nicht in dieser Form in dem Speicher 28 geschrieben sein, Figur 5 ist eine beliebige Repräsentation von vielen. In der ersten Zeile stehen die jeweiligen Seriennummern, die schon ab Werk gespeichert waren. Es sei daran erinnert, dass ein anderes eindeutiges Merkmal wie eine MAC-Adresse ebenso verwendbar wäre. Die zweite Zeile und dritte Zeile zeigen die Netzwerkkonfiguration beispielhaft mit einer zugewiesenen IP-Adresse beziehungsweise einer Node ID, die der Übersichtlichkeit halber geordnet durchnummeriert sind. Die vierte Zeile enthält die jeweilige Gerätekarte, die Kameras kennen sich demnach gegenseitig, d.h. die erste Kamera kennt die zweite und dritte Kamera und so fort. In der fünften Zeile sind in gleicher Weise die jeweils für die beiden anderen Kameras gesicherten Parametersätze aufgeführt. Zusätzlich und hier nicht dargestellt hält jede Kamera noch ihren eigenen Parametersatz gespeichert. Die Parametersätze werden vorzugsweise über mindestens eines der Merkmale Seriennummer, IP-Adresse, Node ID zugeordnet. Das erleichtert die Identifikation eines Ersatzgeräts.

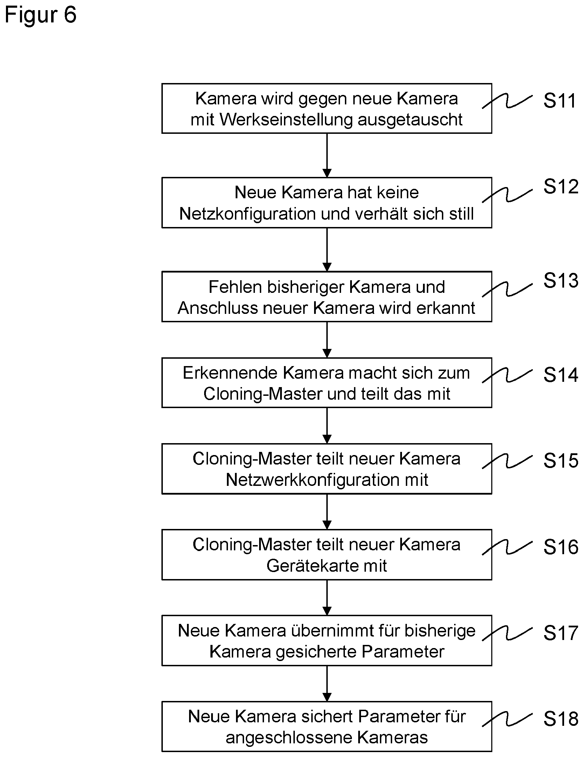

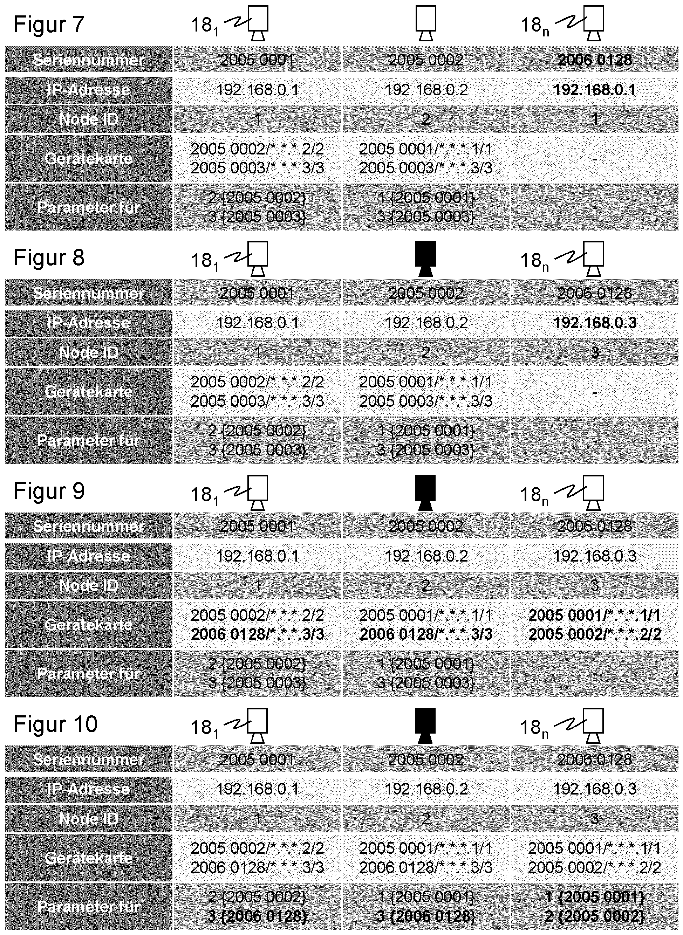

Figur 6 zeigt ein Ablaufschema für einen Austausch einer Kamera 18₁..18ₙ der Kameravorrichtung 10. Mit diesen Schritten wird eine besonders vorteilhafte automatische Konfiguration erreicht, aber jeder Schritt, der nicht ausdrücklich als unverzichtbar gekennzeichnet wird, ist als optional zu betrachten. Die Figuren 7 bis 10 illustrieren Zwischenergebnisse. Dank des automatischen Parameterclonings, für das Figur 6 eine Ausführungsform zeigt, wird ein Gerätetausch ganz erheblich vereinfacht.

In einem Schritt S11 wird ein Defekt entdeckt oder es liegt ein sonstiger Grund für den Austausch vor. Die neue Kamera 18₁..18ₙ wird anstelle der alten Kamera 18₁..18ₙ montiert, mit deren Verbindungen für Versorgung und Netzwerkanschluss verbunden und dann eingeschaltet. Beim Booten erhält die neue Kamera 18₁..18ₙ automatisch die im Netzwerk gespeicherten Konfigurationen und Parameter und ist sofort einsatzbereit. Das wird nun im Einzelnen beschrieben.

In dieser Ausführungsform ist die neue Kamera 18₁..18ₙ anfänglich auf Werkseinstellungen gesetzt. In einem Schritt S12 stellt sie demgemäß fest, dass sie über keine gültige Netzkonfiguration verfügt und verhält sich still. Allenfalls sendet sie eine allgemeine Nachricht mit ihrer Identität, um auf ihren Neuanschluss hinzuweisen.

Figur 7 zeigt in einer Darstellung ähnlich der Figur 5 die gespeicherten Informationen zu diesem Zeitpunkt. Neue oder für die Erläuterung besonders relevante Information ist jeweils fettgedruckt. In der ersten und zweiten Kamera sind weiterhin die bisherigen Seriennummern, Netzwerkkonfigurationen, Gerätekarten und gesicherten Parametersätze gespeichert. Zum Teil betrifft das jedoch die alte dritte Kamera, die nicht mehr verbunden ist. In der dritten Kamera ist lediglich deren Seriennummer sowie eine im Netzwerk nicht gültige Anfangseinstellung für IP-Adresse und Node ID gespeichert.

In einem Schritt S13 wird das Fehlen der alten Kamera und das Hinzufügen der dritten Kamera bemerkt. Hier ist beispielhaft die zweite Kamera diejenige, die den Austausch zuerst erkennt. Sie teilt dies den anderen Kameras mit, insbesondere per Broadcast, und macht sich in einem Schritt S14 selbst zum Cloning-Master. Damit übernimmt sie eine vorübergehende Masterfunktion für die Kommunikation im weiteren Ablauf gemäß Figur 6.

In einem Schritt S15 teilt die als Cloning-Master fungierende zweite Kamera der neuen dritten Kamera eine gültige Netzwerkkonfiguration mit. Vorzugsweise ist das die noch gespeicherte Netzwerkkonfiguration des Vorgängers, an deren Stelle die dritte Kamera nun tritt. Alternativ könnte auch eine neue Netzwerkkonfiguration vergeben und allen mitgeteilt werden. Die dritte Kamera wird damit zu einem Teilnehmer in dem Netzwerk und kann ohne Störungen mit den anderen Kameras kommunizieren.

Figur 8 illustriert die nun in den Kameras gespeicherte Information. Gegenüber der Figur 7 sind nun die Default-Werte für die IP-Adresse und die gültige Node ID für die dritte Kamera mit einer gültigen Netzwerkkonfiguration überschrieben. Die zweite Kamera ist ab nun dunkel dargestellt, um ihre Funktion als Cloning-Master zu illustrieren. Die Tabellen würden aber nicht anders aussehen, wenn beispielsweise die erste Kamera als Cloning-Master fungiert.

In einem Schritt S16 bestimmt die als Cloning-Master fungierende zweite Kamera aktuelle Gerätekarten mit der neuen dritten Kamera und übergibt diese Gerätekarte den anderen Kameras. Es ist denkbar, dass die Gerätekarte vom Cloning-Master und/oder in den annehmenden Kameras zugeschnitten wird, weil nicht zwingend jede Kamera für die Parameter jeder anderen Kamera zuständig ist, sondern gegebenenfalls eine relevante Auswahl trifft.

Figur 9 illustriert das Ergebnis dieses Schritts S16. In den Gerätekarten der ersten Kamera und der zweiten Kamera wird die alte Kamera durch die neue dritte Kamera ersetzt. Die dritte Kamera speichert nun eine Gerätekarte mit den beiden anderen Kameras.

In einem Schritt S17 folgt dann ein erster Teil des eigentlichen Parameterclonings. Die dritte Kamera übernimmt vom Cloning-Master oder einer anderen für sie zuständigen Kamera die für die alte, ausgetauschte Kamera gesicherten Parameter. Damit kann die dritte Kamera die alte Kamera ohne erneute Parametrierung oder Konfiguration ersetzen. Funktionell entspricht das dem herkömmlichen Schritt, die SD-Karte der alten Kamera in die neue Kamera einzusetzen und auszulesen.

In einem Schritt S18 wird das Parametercloning durch einen zweiten Teil vervollständigt. Die dritte Kamera erhält die Parametersätze der auf ihre Gerätekarte verzeichneten Kameras, also der ersten Kamera und der zweiten Kamera, und sichert sie in ihrem eigenen Speicher 28. Damit könnte bei einem künftigen Tausch der ersten oder zweiten Kamera nun die dritte Kamera die Rolle des Cloning-Masters oder zumindest des ausgelagerten Parameterspeichers übernehmen.

Figur 10 zeigt die abschließend gespeicherten Informationen. Die dritte Kamera hat nun Parametersätze für die beiden anderen Kameras gesichert. Umgekehrt halten die erste und zweite Kamera weiterhin den Parametersatz für die dritte Kamera gespeichert. Dieser Parametersatz ist vorerst identisch zu demjenigen des alten Gerätes, es gilt also in der letzten Zeile der Tabelle 3 {2005 0003} = 3 {2006 0128}. Sollte jedoch die dritte Kamera gezielt umkonfiguriert werden, so halten künftig die erste und zweite Kamera den neuen Parametersatz der dritten Kamera und nicht mehr den dann obsoleten Parametersatz des ausgetauschten Altgeräts.

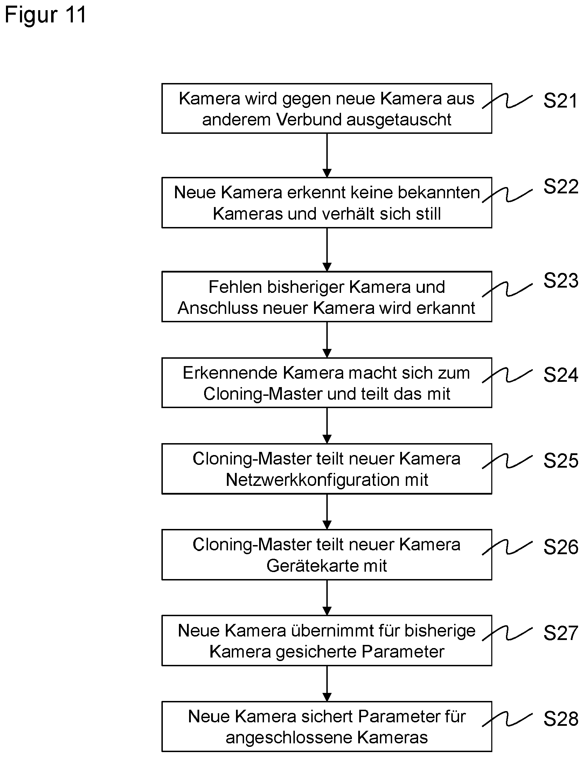

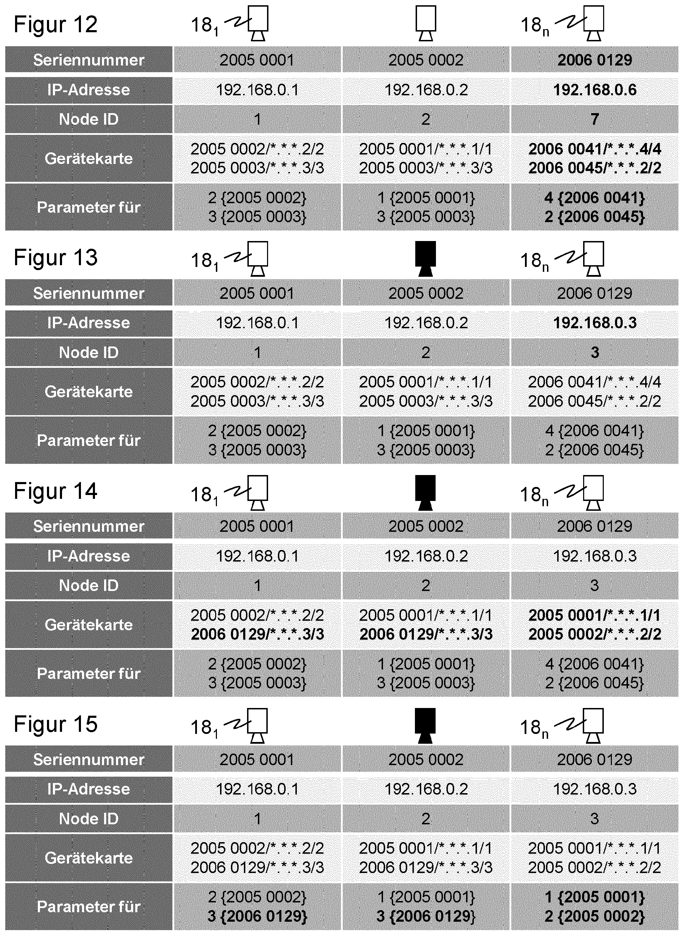

Figuren 11 zeigt ein Ablaufschema für eine alternative Ausführungsform, und die Figuren 12 bis 15 illustrieren analog zu den Figuren 7 bis 10 Zwischenergebnisse. Im Unterschied zu der unter Bezugnahme auf die Figuren 6 bis 10 beschriebenen Ausführungsform ist nun die neue Kamera, wiederum die dritte Kamera, kein Gerät auf Werkseinstellungen, sondern war bereits in einem anderen Netzwerk eingesetzt.

In der dritten Kamera ist also in Schritt 21 anders als im Schritt 11 der Figur 6 bereits eine Netzwerkkonfiguration, Gerätekarte und Sicherung von Parametersätzen für weitere Kameras gespeichert. Das ist in Figur 12 gezeigt, wo in der letzten Spalte bereits überall Werte eingetragen sind, die aber im neuen Netzwerk mit Ausnahme der Seriennummer keine Gültigkeit haben.

In einem Schritt S22 besteht nun die Herausforderung, dass die dritte Kamera zunächst nicht weiß, dass sie nun in einem neuen Netzwerk angeschlossen ist. Es muss verhindert werden, dass sie ihre ungültigen gespeicherten Parametersätze verbreitet und die Netzwerkkommunikation stört. Die dritte Kamera erkennt diese Situation daran, dass keine der in ihrer Gerätekarte eingetragenen Kameras erreichbar ist. Deshalb verhält sich die dritte Kamera still und wartet, dass ihr eine neue Netzwerkkonfiguration, eine neue Gerätekarte und neue Parametersätze übertragen werden.

Übrigens ist dieser Schritt neben der erhöhten Redundanz und Sicherheit ein weiterer Grund, warum vorzugsweise jede Kamera gegenseitig Parametersätze mit mindestens zwei weiteren Kameras sichern sollte. Im Falle eines Gerätetausches würde nämlich sonst der einzige im Netzwerk verbleibende Partner des ausgetauschten Geräts irrig annehmen, dass es sich um ein komplett neues Netzwerk handelt, weil keine der in der Gerätekarte vermerkten Kameras noch antwortet, und das könnte zu inkonsistenten Zuständen führen.

Die weiteren Schritte S23 bis S28 unterscheiden sich dann nicht mehr von den Schritten S13 bis S18 der Figur 6. In Figur 13 ist für die dritte Kamera noch die ungültige alte Gerätekarte und in den Figuren 13 und 14 sind noch die Parametersätze der Partner des früheren Netzwerks gezeigt. Sie werden sukzessive überschrieben. Die ungültigen Informationen könnten alternativ auch gelöscht werden, sobald die dritte Kamera im Schritt S22 festgestellt hat, dass sie sich in einem neuen Netzwerk befindet. Damit würden die Figuren 13 bis 15, abgesehen von der anderen Seriennummer der dritten Kamera, genauso aussehen wie die Figuren 8 bis 10.

Alternativ zu dem Ablaufschema der Figur 11 kann die neue Kamera zunächst auf Werkseinstellungen gesetzt und dann das Ablaufschema der Figur 6 angewandt werden. Das ist aber womöglich etwas umständlich, weil der Servicetechniker die neue Kamera isoliert nicht ohne Weiteres ansprechen kann, um das Rücksetzen auszulösen. Außerdem ist es ungünstig, überhaupt ein manuelles Eingreifen des Servicetechnikers zu fordern, weil dies vergessen werden könnte und damit eine zusätzliche Fehlerquelle darstellt.

## Patentansprüche

1. Kamera (18ᵢ), die einen Bildsensor (22) zur Aufnahme von Bilddaten aus einem Sichtbereich (20), eine Kommunikationsschnittstelle (30) zum Verbinden mit mindestens einer weiteren Kamera (18ᵢ) in einem Netzwerk, eine Steuer- und Auswertungseinheit (26) zum Auslesen der Bilddaten sowie einen Speicher (28) aufweist, in dem ein Parametersatz für den Betrieb der Kamera (18ᵢ) abgelegt ist,
**dadurch gekennzeichnet,**
**dass** in dem Speicher (28) mindestens ein weiterer Parametersatz für den Betrieb mindestens einer weiteren Kamera (18ᵢ) des Netzwerks abgelegt ist.

2. Kamera (18ᵢ) nach Anspruch 1,
wobei in dem Speicher (28) eine Netzwerkkonfiguration abgelegt ist.

3. Kamera (18ᵢ) nach Anspruch 1 oder 2,
wobei in dem Speicher (28) eine Gerätekarte mit der mindestens einen weiteren Kamera (18ᵢ) abgelegt ist, wobei die Gerätekarte die Kameras (18ᵢ) umfasst, die gegenseitig füreinander einen Parametersatz speichern.

4. Kamera (18ᵢ) nach einem der vorhergehenden Ansprüche,
wobei in dem Speicher (28) weitere Parametersätze für den Betrieb von mindestens zwei weiteren Kameras (18ᵢ) des Netzwerks abgelegt sind.

5. Kamera (18ᵢ) nach einem der vorhergehenden Ansprüche,
wobei die Steuer- und Auswertungseinheit (26) dafür ausgebildet ist, einen Kameratausch in dem Netzwerk zu erkennen, wenn eine weitere Kamera (18ᵢ) nicht mehr im Netzwerk verbunden ist und anschließend eine neue Kamera (18ᵢ) im Netzwerk verbunden wird.

6. Kamera (18ᵢ) nach einem der vorhergehenden Ansprüche,
wobei die Steuer- und Auswertungseinheit (26) dafür ausgebildet ist, sich in dem Netzwerk bei Erkennen eines Kameratauschs als Master für die Einbindung der neuen Kamera (18ᵢ) in das Netzwerk zu melden.

7. Kamera (18ᵢ) nach Anspruch 5 oder 6,
wobei die Steuer- und Auswertungseinheit (26) dafür ausgebildet ist, der neuen Kamera (18ᵢ) die Netzwerkkonfiguration der nicht mehr verbundenen weiteren Kamera (18ᵢ) mitzuteilen.

8. Kamera (18ᵢ) nach einem der Ansprüche 5 bis 7,
wobei die Steuer- und Auswertungseinheit (26) dafür ausgebildet ist, dem Netzwerk einschließlich der neuen Kamera (18ᵢ) eine aktualisierte Gerätekarte zu kommunizieren.

9. Kamera (18ᵢ) nach einem der Ansprüche 5 bis 8,
wobei die Steuer- und Auswertungseinheit (26) dafür ausgebildet ist, den für die bisher verbundene weitere Kamera (18ᵢ) gespeicherten weiteren Parametersatz an die neue Kamera (18ᵢ) zu übertragen.

10. Kamera (18ᵢ) nach einem der Ansprüche 5 bis 9,
wobei die Steuer- und Auswertungseinheit (26) dafür ausgebildet ist, eine Übertragung der weiteren Parametersätze einer weiteren Kamera (18ᵢ), die in dem Speicher (28) der nicht mehr verbundenen Kamera (18ᵢ) abgelegt waren, in den Speicher (28) der neuen Kamera (18ᵢ) zu veranlassen.

11. Kamera (18ᵢ) nach einem der vorhergehenden Ansprüche,
wobei die Steuer- und Auswertungseinheit (26) dafür ausgebildet ist zu erkennen, dass sie sich in einem noch unkonfigurierten Zustand befindet, und auf Kommunikationsanforderungen des Netzwerks zu warten und/oder zu erkennen, dass das Netzwerk nicht dasjenige der mindestens einen weiteren Kamera (18ᵢ) ist, für die ein weiterer Parametersatz gespeichert ist, und auf Kommunikationsanforderungen des Netzwerks zu warten.

12. Kamera (18ᵢ) nach einem der vorhergehenden Ansprüche,
wobei die Steuer- und Auswertungseinheit (26) dafür ausgebildet ist, einen im Speicher (28) abgelegten weiteren Parametersatz mit einer weiteren Kamera (18ᵢ) abzugleichen.

13. Kamera (18ᵢ) nach einem der vorhergehenden Ansprüche,
wobei die Steuer- und Auswertungseinheit (26) dafür ausgebildet ist, Codes in den Bilddaten zu lesen.

14. Kameravorrichtung (10) mit einer Vielzahl von Kameras (18₁..18ₙ) nach einem der vorhergehenden Ansprüche, die in einem Netzwerk verbunden sind, die insbesondere als Lesetunnel zum Lesen von Codes (16) auf Objekten (14) ausgebildet ist, die durch den Lesetunnel gefördert werden.

15. Verfahren zum Austausch einer Kamera (18ᵢ) in einer Kameravorrichtung (10), insbesondere in einer Kameravorrichtung (10) mit mehreren Kameras (18₁..18ₙ) nach einem der Ansprüche 1 bis 13, wobei erkannt wird, wenn eine Kamera(18i) gegen eine neue Kamera (18ᵢ) ausgetauscht wird, und wobei eine der verbleibenden Kameras (18ᵢ) einen zuvor für die ausgetauschte Kamera (18ᵢ) gesicherten Parametersatz auf die neue Kamera (18ᵢ) überspielt.

## Geänderte Patentansprüche

### Geänderte Patentansprüche gemäss Regel 137(2) EPÜ.

1. Kamera (18ᵢ), die einen Bildsensor (22) zur Aufnahme von Bilddaten aus einem Sichtbereich (20), eine Kommunikationsschnittstelle (30) zum Verbinden mit mindestens einer weiteren Kamera (18ᵢ) in einem Netzwerk, eine Steuer- und Auswertungseinheit (26) zum Auslesen der Bilddaten sowie einen Speicher (28) aufweist, in dem ein Parametersatz für den Betrieb der Kamera (18ᵢ) abgelegt ist, wobei in dem Speicher (28) mindestens ein weiterer Parametersatz für den Betrieb mindestens einer weiteren Kamera (18ᵢ) des Netzwerks abgelegt ist, **dadurch gekennzeichnet,**
**dass** in dem Speicher (28) eine Gerätekarte mit einer Identifikation oder Adresse der mindestens einen weiteren Kamera (18ᵢ) abgelegt ist, wobei die Gerätekarte die Kameras (18ᵢ) umfasst, die gegenseitig füreinander einen Parametersatz speichern.

2. Kamera (18ᵢ) nach Anspruch 1,
wobei in dem Speicher (28) eine Netzwerkkonfiguration abgelegt ist.

3. Kamera (18ᵢ) nach einem der vorhergehenden Ansprüche,
wobei in dem Speicher (28) weitere Parametersätze für den Betrieb von mindestens zwei weiteren Kameras (18ᵢ) des Netzwerks abgelegt sind.

4. Kamera (18ᵢ) nach einem der vorhergehenden Ansprüche,
wobei die Steuer- und Auswertungseinheit (26) dafür ausgebildet ist, einen Kameratausch in dem Netzwerk zu erkennen, wenn eine weitere Kamera (18ᵢ) nicht mehr im Netzwerk verbunden ist und anschließend eine neue Kamera (18ᵢ) im Netzwerk verbunden wird.

5. Kamera (18ᵢ) nach einem der vorhergehenden Ansprüche,
wobei die Steuer- und Auswertungseinheit (26) dafür ausgebildet ist, sich in dem Netzwerk bei Erkennen eines Kameratauschs als Master für die Einbindung der neuen Kamera (18ᵢ) in das Netzwerk zu melden.

6. Kamera (18ᵢ) nach Anspruch 4 oder 5,
wobei die Steuer- und Auswertungseinheit (26) dafür ausgebildet ist, der neuen Kamera (18ᵢ) die Netzwerkkonfiguration der nicht mehr verbundenen weiteren Kamera (18ᵢ) mitzuteilen.

7. Kamera (18ᵢ) nach einem der Ansprüche 4 bis 6,
wobei die Steuer- und Auswertungseinheit (26) dafür ausgebildet ist, dem Netzwerk einschließlich der neuen Kamera (18ᵢ) eine aktualisierte Gerätekarte zu kommunizieren.

8. Kamera (18ᵢ) nach einem der Ansprüche 4 bis 7,
wobei die Steuer- und Auswertungseinheit (26) dafür ausgebildet ist, den für die bisher verbundene weitere Kamera (18ᵢ) gespeicherten weiteren Parametersatz an die neue Kamera (18ᵢ) zu übertragen.

9. Kamera (18ᵢ) nach einem der Ansprüche 4 bis 8,
wobei die Steuer- und Auswertungseinheit (26) dafür ausgebildet ist, eine Übertragung der weiteren Parametersätze einer weiteren Kamera (18ᵢ), die in dem Speicher (28) der nicht mehr verbundenen Kamera (18ᵢ) abgelegt waren, in den Speicher (28) der neuen Kamera (18ᵢ) zu veranlassen.

10. Kamera (18ᵢ) nach einem der vorhergehenden Ansprüche,
wobei die Steuer- und Auswertungseinheit (26) dafür ausgebildet ist zu erkennen, dass sie sich in einem noch unkonfigurierten Zustand befindet, und auf Kommunikationsanforderungen des Netzwerks zu warten und/oder zu erkennen, dass das Netzwerk nicht dasjenige der mindestens einen weiteren Kamera (18ᵢ) ist, für die ein weiterer Parametersatz gespeichert ist, und auf Kommunikationsanforderungen des Netzwerks zu warten.

11. Kamera (18ᵢ) nach einem der vorhergehenden Ansprüche,
wobei die Steuer- und Auswertungseinheit (26) dafür ausgebildet ist, einen im Speicher (28) abgelegten weiteren Parametersatz mit einer weiteren Kamera (18ᵢ) abzugleichen.

12. Kamera (18ᵢ) nach einem der vorhergehenden Ansprüche,
wobei die Steuer- und Auswertungseinheit (26) dafür ausgebildet ist, Codes in den Bilddaten zu lesen.

13. Kameravorrichtung (10) mit einer Vielzahl von Kameras (18₁..18ₙ) nach einem der vorhergehenden Ansprüche, die in einem Netzwerk verbunden sind, die insbesondere als Lesetunnel zum Lesen von Codes (16) auf Objekten (14) ausgebildet ist, die durch den Lesetunnel gefördert werden.

14. Verfahren zum Austausch einer Kamera (18ᵢ) in einer Kameravorrichtung (10), insbesondere in einer Kameravorrichtung (10) mit mehreren Kameras (18₁..18ₙ) nach einem der Ansprüche 1 bis 13, wobei erkannt wird, wenn eine Kamera (18ᵢ) gegen eine neue Kamera (18ᵢ) ausgetauscht wird, und wobei eine der verbleibenden Kameras (18ᵢ) einen zuvor für die ausgetauschte Kamera (18ᵢ) gesicherten Parametersatz auf die neue Kamera (18ᵢ) überspielt,
**dadurch gekennzeichnet,**
**dass** in den Kameras (18₁..18ₙ) jeweils eine Gerätekarte mit einer Identifikation oder Adresse mindestens einer weiteren Kamera (18ᵢ) abgelegt ist, wobei die Gerätekarte die Kameras (18ᵢ) umfasst, die gegenseitig füreinander einen Parametersatz speichern, und dass eine der Kameras (18₁..18ₙ) erkennt, wenn eine Kamera (18ᵢ) gegen eine neue Kamera (18ᵢ) ausgetauscht wird.
